Europäisches Patentamt

European Patent Office

Office européen des brevets

(11) Veröffentlichungsnummer: **0 422 624 A1**

# (12) EUROPÄISCHE PATENTANMELDUNG

(21) Anmeldenummer: 90119432.4

(22) Anmeldetag: 10.10.90

(51) Int. Cl.⁵: **A01D 34/68, A01D 43/00**

(30) Priorität: 10.10.89 DE 3933818
09.01.90 DE 4000352
25.08.90 DE 4026930

(43) Veröffentlichungstag der Anmeldung:
17.04.91 Patentblatt 91/16

(84) Benannte Vertragsstaaten:
AT DE FR GB IT SE

(71) Anmelder: Eggenmüller, Alfred, Dr.
Schützenweg 10
W-7915 Elchingen 1(DE)

(72) Erfinder: Eggenmüller, Alfred, Dr.
Schützenweg 10
W-7915 Elchingen 1(DE)

(74) Vertreter: Kahler, Kurt, Dipl.-Ing.
Postfach 1249 Gerberstrasse 3
W-8948 Mindelheim(DE)

(54) **Verfahren und Vorrichtung zum Einmulchen von Halm- oder Blattgut, insbesondere von Gras oder Laub.**

(57) Zu einer schnelleren Verrottung beim Einmulchen von Halm- oder Blattgut, insbesondere von Gras oder Laub, wird ein Verfahren und eine Vorrichtung vorgeschlagen, die eine gleichmäßige Verteilung, einen geringen Bauaufwand, geringen Leistungsbedarf und eine hohe Betriebssicherheit ermöglichen.

Hierzu wird vorgeschlagen, das gemähte/aufgenommene Halm- oder Blattgut beim Weiterfördern zu zerreißen und zu zerquetschen, sowie anschließend in Breitenrichtung verteilt auf den Boden abzulegen. Die Vorrichtung zum Einmulchen weist eine Mäh-/Aufnahmevorrichtung (1) und eine unmittelbar anschließende Zerkleinerungs- und Preßvorrichtung (4) auf, wobei diese aus einem Zinkenrotor (5) mit starren Zinken (6) besteht, und daran anschließend eine Verteilvorrichtung (12) angeordnet ist.

Das vorgeschlagene Verfahren und die Vorrichtung eignen sich insbesondere zum Einsatz an Rasenmähern zum Einmulchen von Rasenschnitt oder Laub, wobei bevorzugt in Anpassung an die jeweilige Rasenhöhe ein beliebiger Anteil des Rasenschnittes eingemulcht werden kann, so daß eine schnelle Verrottung erfolgen kann.

FIG.1

## VERFAHREN UND VORRICHTUNG ZUM EINMULCHEN VON HALM- ODER BLATTGUT, INSBESONDERE VON GRAS ODER LAUB

Die Erfindung betrifft ein Verfahren und eine Vorrichtung zum Einmulchen von Halm- oder Blattgut, insbesondere von Gras oder Laub, bei dem/der zunächst das Halm- oder Blattgut durch eine Mäh-/Aufnahmevorrichtung gemäht und/oder aufgenommen wird, dann durch eine sich daran unmittelbar anschließende Zerkleinerungs-und Preßvorrichtung zerkleinert und gepreßt, sowie schließlich auf dem Boden abgelegt wird.

Aus der US-A-3,846,963 ist ein Zusatzgerät zu einem Rasenmäher bekannt, bei dem das gemähte Gras einer Transportschnecke zugeführt wird, die es in eine Schneideinrichtung fördert, wobei das Gras weiter zerkleinert wird, ehe es durch eine Lochscheibe auf dem Boden abgelegt wird. Dabei wird das gemähte Blattgut im wesentlichen nur gekürzt und nur einer geringen Verdichtung ausgesetzt. Durch diese relativ schonende Behandlung ist der Verrottungsprozeß des Rasenschnittes nicht wesentlich schneller als bei unbehandelt abgelegtem Gut. Zudem erfolgt das Ablegen des Grases auf dem Boden bzw. dem Rasen in Form eines Gutstranges von nur wenigen Zentimetern Breite, so daß gegenüber der Arbeitsbreite des Rasenmähers von etwa 1 m es zu starken Gutanhäufungen kommt, die einer schnellen Verrottung hinderlich sind. Außerdem ist die Antriebsleistung für ein derartiges Zusatzgerat relativ hoch, da das gesamte Halm- oder Blattgut durch die relativ engen Bohrungen der Lochscheibe hindurchgepreßt wird. Zudem können die Bohrungen der Lochscheibe durch mitaufgenommene Steine leicht verstopfen, so daß neben einer steigenden Antriebsleistung die Betriebssicherheit gefährdet ist.

Aus der DE-A-30 48 364 und der DE-A-28 31 011 sind desweiteren Vorrichtungen zur Behandlung von Grünflächen bekannt, bei denen das Mähgut vom Boden aufgenommen, zusammengedrückt, zerkleinert und dann abgelegt wird. Die dort vorgesehenen Preßvorrichtungen in Form eines Kollerganges bzw. einer Schneckenpresse sind jedoch sehr bauaufwendig und benötigen wegen der ebenfalls vorgesehenen Lochscheibe eine hohe Antriebsleistung. Zudem sind diese Preßvorrichtungen im Gegensatz zur erstgenannten Druckschrift nicht in unmittelbarer Nähe der Mähvorrichtung angeordnet, sondern über ein aufwendiges Sauggebläse und eine Saugleitung damit verbunden.

Zur Aufnahme des Mähgutes ist dort ein Auffangbehälter vorgesehen, in dem auch die Preßvorrichtung umläuft. Das von dem Sauggebläse geförderte Gut nimmt in dem Auffangbehälter viel Raum ein, da es nicht verdichtet ist. Somit ist zur Zwischenspeicherung von Mähgut ein großer Behälter notwendig bzw. eine Zwischenspeicherung von Mähgut kaum möglich. Vielmehr muß die Preßvorrichtung zum Vermeiden von Verstopfungen dauernd angetrieben sein.

Weiterhin ist als Verteileinrichtung eine unterhalb der Preßeinrichtung rotierende Scheibe vorgesehen, die als Schleuderteller ausgebildet ist. Hierdurch wird im Mittelbereich der Arbeitsbreite nur relativ wenig gestreut, während am Außenbereich viel Preßgut gestreut wird, insbesondere in die noch nicht gemähte Rasenfläche.

Demzufolge ist es Aufgabe der Erfindung, ein Verfahren und eine Vorrichtung zum Einmulchen zu schaffen, bei dem das Blatt- oder Halmgut für eine schnelle Verrottung aufgeschlossen und gleichmäßig verteilt wird, wobei ein geringer Bauaufwand und Leistungsbedarf sowie eine hohe Betriebssicherheit erreicht werden sollen.

Diese Aufgabe wird gelöst durch ein Verfahren mit den Merkmalen des Patentanspruchs 1, sowie durch eine Vorrichtung gemäß dem Patentanspruch 6.

Durch das vorgeschlagene Verfahren bzw. die Vorrichtung wird das Gut durch Zerreißen und Zerquetschen in der Preßvorrichtung beim Weiterfördern stark zerkleinert und über die gesamte oder annähernd gesamte Arbeitsbreite breitflachig verteilt auf dem Boden bzw. auf der Rasenfläche abgelegt. Im Gegensatz zu langem und schwerem Mähgut oder aufgenommenem Laub fallen die leichten und stark kompaktierten Halm- oder Blattgutteile zwischen die Grasstoppeln hinein. Durch die Berührung mit dem Boden gelangen die für eine schnelle Verrottung wichtigen Bodenbakterien leicht an das stark zerkleinerte Halm- oder Blattgut, wobei die durch das intensive Zerreißen und Zerquetschen beschädigte Oberfläche von Gras und Laub eine gute Angriffsfläche für Bakterien und die Witterung bietet. Durch die hohe Verdichtung im Preßkanal der Zerkleinerungs- und Preßvorrichtung wird das Zellwasser zusätzlich herausgedrückt, wodurch der Verrottungsprozeß beschleunigt wird. Durch die Verteilung über die gesamte Arbeitsbreite der Mäh- oder Aufsammelvorrichtung ergibt sich eine breitflächige und gleichmäßige Verteilung des Halm- oder Blattgutes, so daß im Sinne eines wirkungsvollen Mulchverfahrens eine breitflächige Abdeckung und Zuführung von Nährstoffen für den Boden erreicht wird. Ein Abschleudern des Halm- oder Blattgutes über die Arbeitsbreite hinaus, z. B. auf noch ungemähte Rasenflächen oder Wege wird durch die seitlichen Begrenzungen des Verteiler- oder Mähergehäuses ausgeschlossen.

Von besonderem Vorteil ist die zugleich mit dem Zerkleinern und Pressen durchgeführte kontinuierliche Weiterförderung in einem sich daran anschließenden Kanal, wodurch anstatt einer leistungszehrenden Lochscheibe durch den großen Kanalquerschnitt ein bedeutend geringerer Leistungsbedarf und höhere Betriebssicherheit erreicht wird.

Durch die vorgeschlagene Umlenkung des zerkleinerten und gepreßten Halm- oder Blattgutes in die Mäh-/Aufnahmevorrichtung zurück, wird durch die dort umlaufenden Werkzeuge eine besonders gleichmäßige Verteilung erreicht. Zudem kann durch diese Rückführung des Halm- oder Blattgutes über einen Umlenkkanal eine gesonderte Verteileinrichtung eingespart werden, so daß sich ein besonders niedriger Bauaufwand und Raumbedarf ergibt.

Nach einem weiteren Merkmal der Erfindung wird das zerkleinerte und gepreßte Halm- und/oder Blattgut in einem ersten Teilstrom einem Behälter zugeführt und dort gesammelt, sowie in einem zweiten Teilstrom in eine Verteilvorrichtung zur Verteilung zurückgeführt. Hierdurch wird erreicht, daß bei besonders hohen Beständen und hohem Halm- oder Blattgutanfall nur derjenige Teil eingemulcht wird, der von dem Boden oder der Rasenfläche noch aufgenommen werden kann. Somit ist eine Einmulchung je nach Rasenhöhe durchführbar, wobei die überschüssigen Mengen an Halm- oder Blattgut in einem Behälter stark verdichtet und damit raumsparend gesammelt werden. Bevorzugt sind die Anteile des gesammelten Teilstromes und des auf dem Rasen abgelegten Teilstromes stufenlos veränderbar, so daß der Grad der Einmulchung auf die jeweilige Rasenhöhe angepaßt werden kann. Hierbei kann zunächst auch das gesamte zerkleinerte und gepreßte Halm- oder Blattgut in einem Behälter stark kompaktiert und damit raumsparend gesammelt werden und von dort ganz oder teilweise auf dem Boden in Breitenrichtung gleichmäßig verteilt abgelegt werden.

Die vorgeschlagene Vorrichtung zum Einmulchen von Halm- oder Blattgut zeichnet sich durch eine intensive Zerkleinerung und Kompaktierung des Halm- und Blattgutes aus, so daß dieses leicht über die Bodenfläche verteilt werden kann und hierbei durch die Vielzahl der Quetschflächen an den Halmen oder dem Laub eine schnelle Verrottung gewährleistet ist. In bevorzugter Ausführung ist die Zerkleinerungs- und Preßvorrichtung als Zinkenrotor mit starren Zinken ausgebildet, die mit einem Pressenmantel zusammenwirken und periodisch in einen Preßkanal eingreifen, wobei zur noch intensiveren Zerkleinerung Rillen vorgesehen sein können, durch die die Zinken bei deren Rotation hindurchlaufen und so das Halm- und Blattgut zerreißen, zerquetschen und zusammendrücken, wodurch sich die Vielzahl der Angriffsflächen für die spätere Verrottung ergibt. Diese Ausführung des Zinkenrotors weist nur einen geringen Bauaufwand und eine geringe Antriebsleistung auf, sowie eine geringe Störanfälligkeit gegen Steine und ähnliche Fremdkörper. Hierdurch wird eine sehr hohe Betriebssicherheit auch bei steinigen Böden erreicht.

Die Verteileinrichtung für die breitflächige Verteilung des zerkleinerten Halm- oder Blattgutes wird in einfachster Ausgestaltung durch einen sich in Arbeitsbreite konisch erweiternden, steil ansteigenden Krümmer mit einer Auslaßöffnung gebildet, wobei bei der Förderung des Preßgutes nach oben dieses in dem sich konisch erweiternden Krümmer seitlich auseinanderfällt, um nach Erreichen des höchsten Punktes in Breitenrichtung langsam herunterzufallen und damit breitflächig auf der Rasenfläche verteilt zu werden. Sofern höhere Anforderungen an die Verteilgenauigkeit gefordert sind, kann die Verteilvorrichtung auch durch eine angetriebene Verteilerwalze gebildet sein.

Von besonderem Vorteil ist die Rückführung des zerkleinerten und gepreßten Halm- oder Blattgutes in die Mäh-/Aufnahmevorrichtung, da deren umlaufende Werkzeuge dann zugleich die Verteilung des Halm- oder Blattgutes übernehmen. Hierzu ist nach der Zerkleinerungs- und Preßvorrichtung ein Umlenkkanal vorgesehen, der durch ein Umlenkelement, insbesondere eine Umlenkklappe oder einen Umlenkbogen wahlweise im Bereich zwischen 0 und 100 % bestückbar ist, so daß der Anteil des auf dem Boden verteilten Gutes in Bezug zu dem gemähten oder aufgenommenen Gut variabel auf die Gegebenheiten (Rasenhöhe, Bodenverträglichkeit) einstellbar ist. Durch die seitlichen Wände des Gehäuses der Mähvorrichtung wird dabei die Verteilbreite des einzumulchenden Gutes im wesentlichen an deren Arbeitsbreite angepaßt. Insgesamt ergibt sich eine sehr kompakte Vorrichtung, die kaum über der Größe einer üblichen Mähvorrichtung, insbesondere eines Rasenmähers liegt.

Weitere vorteilhafte Ausgestaltungen sind Gegenstand der Unteransprüche und werden nachfolgend anhand mehrerer in der Zeichnung dargestellten Ausführungsbeispiele näher beschrieben und erläutert. Es zeigen:

Fig. 1 eine Mähvorrichtung mit Zerkleinerungs- und Preßvorrichtung sowie Verteilvorrichtung in Seitenansicht;

Fig. 2 eine Mähvorrichtung gemäß Fig. 1 in Draufsicht;

Fig. 3 eine Zerkleinerungs- und Preßvorrichtung mit einer abgewandelten Ausführung der Verteilvorrichtung;

Fig. 4 eine Zerkleinerungs- und Preßvorrichtung mit einer dritten Ausführung der Verteilvorrichtung;

Fig. 5 eine Mähvorrichtung gemäß Fig. 1 mit einer abgewandelten Zerkleinerungs- und Preßvorrichtung;

Fig. 6 eine Draufsicht gemäß Fig. 5;

Fig. 7 eine Mähvorrichtung mit einer Zerkleinerungs- und Preßvorrichtung sowie einem Behälter;

Fig. 8 die Mähvorrichtung gemäß Fig. 7 in einer abgewandelten Arbeitsstellung;

Fig. 9 die Mähvorrichtung gemäß Fig. 7 und Fig. 8 in einer weiteren Arbeitsstellung;

Fig. 10 eine vergrößerte Darstellung der Zerkleinerungs- und Preßvorrichtung mit einer abgewandelten Gutführung;

Fig. 11 die Zerkleinerungs- und Preßvorrichtung gemäß Fig. 10 in einer abgewandelten Arbeitsstellung;

Fig. 12 eine Mähvorrichtung gemäß den Figuren 7, 8 und 9 in einer abgewandelten Ausführungsform;

Fig. 13 eine Draufsicht auf eine weitere Ausführungsform der Zerkleinerungs- und Preßvorrichtung;

Fig. 14 eine Seitenansicht auf die Zerkleinerungs- und Preßvorrichtung gemäß Fig. 13;

Fig. 15 eine abgewandelte Ausführungsform der Zerkleinerungs-und Preßvorrichtung gemäß Fig. 13; und

Fig. 16 eine weiterhin abgewandelte Ausführungsform gemäß Fig. 15 in Draufsicht.

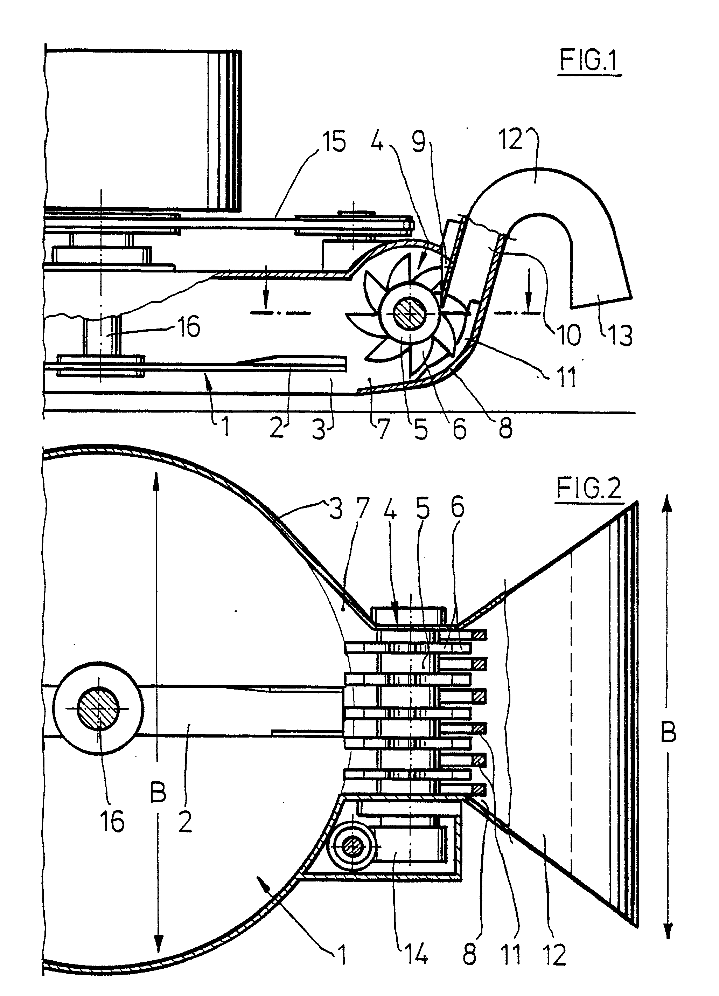

In den Figuren 1 und 2 ist eine Mähvorrichtung 1 als Rasenmäher dargestellt, in dessen Gehäuse 3 ein Werkzeug 2, hier ein Sichelmesser umläuft. Die Mähvorrichtung 1 wird hier in Richtung auf die linke Zeichnungsseite bewegt, wobei über eine Arbeitsbreite B der Rasen gemäht wird. Anstatt der Mähvorrichtung 1 kann auch eine Aufnahmevorrichtung, beispielsweise eine umlaufende Pick-up-Trommel oder dergleichen vorgesehen sein. An die Mähvorrichtung 1 schließt sich eine Zerkleinerungs- und Preßvorrichtung 4 an, die im wesentlichen aus einem Zinkenrotor 5 mit starren Zinken 6 besteht. Die Zerkleinerungs- und Preßvorrichtung 4 ist in geringem Abstand zu dem umlaufenden Werkzeug 2 angeordnet, so daß über einen Einlaufbereich 7 das gemähte Halm- oder Blattgut in den Bereich der Zinken 6 gelangt, die es entlang einem Pressenmantel 8 und einem kammartigen Abstreifer 9 in einen Preßkanal 10 drückt. Beim Fördern des Halm- oder Blattgutes wird dieses durch die starren Zinken 6 in als Längsrippen gestaltete Rillen 11 gedrückt, wobei das Halm- oder Blattgut zerrissen und zerquetscht wird. Beim Weiterfördern in den Preßkanal 10 wird das Preßgut weiter zusammengedrückt, so daß Feuchtigkeit aus dem Halm- oder Blattgut austritt.

Der Aufbau der Mäh-/Aufnahmevorrichtung 1 und der Zerkleinerungs- und Preßvorrichtung 4 ist für die nachfolgenden Figuren im wesentlichen gleich, so daß für die nachfolgenden Ausführungsformen für die bisherigen Bauteile 1 bis 11 eine jeweils um zwanzig erhöhte Bezugsziffer zur schnelleren Übersicht gewählt wird.

Bei der Ausführungsform gemäß Fig. 1 und 2 gelangt das gepreßte Gut im weiteren Verlauf in einen stark ansteigenden und sich konisch erweiternden Krümmer 12, wobei das zerkleinerte und gepreßte Gut nach außen an die Seitenflächen des Krümmers 12 gedrückt wird bzw. locker nach außen fällt. Hierdurch ergibt sich eine Breitenverteilung in Richtung der Arbeitsbreite B gesehen, so daß nach Erreichen des höchsten Punktes des Krümmers 12 das zerkleinerte Halm- oder Blattgut über die Arbeitsbreite B gleichmäßig verteilt nach unten durch eine Auslaßöffnung 13 auf die Rasenfläche bzw. den Boden herabfällt. Der Zinkenrotor 5 wird über ein Schneckengetriebe 14 angetrieben, das über einen Keilriemenantrieb 15 von der Messerwelle der Mähvorrichtung 1 angetrieben ist.

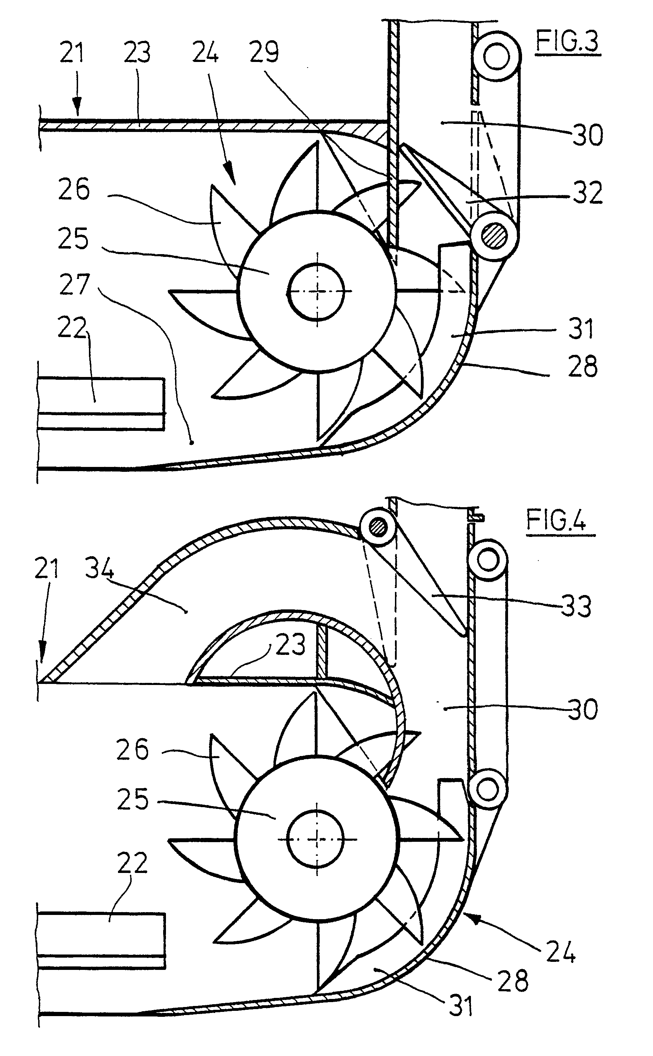

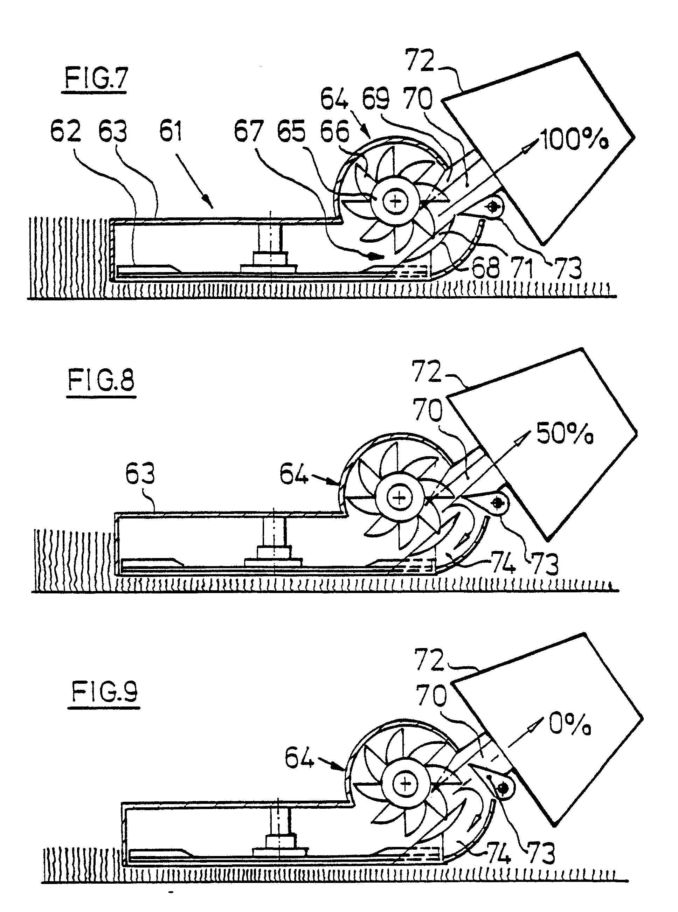

In Fig. 3 ist eine im wesentlichen ähnliche Zerkleinerungs- und Preßvorrichtung 24 im hinteren Bereich einer Mähvorrichtung 21 mit umlaufenden Werkzeugen 22 angeordnet. Ein Zinkenrotor 25 fördert das über einen Einlaufbereich 27 von den umlaufenden Werkzeugen 22 abgeschleuderte Halm- oder Blattgut mittels starrer Zinken 26 entlang einem Pressenmantel 28 durch Rillen 31 hindurch zu einem Preßkanal 30. An diesen Preßkanal 30 kann sich ähnlich wie in Fig. 1 eine Verteileinrichtung 12 oder ein Sammelbehälter (vgl. Fig. 7 - 9) anschließen. Zur Umstellung auf die Ablage des zerkleinerten und gepreßten Halm- oder Blattgutes auf den Boden ist an der Rückwand des Preßkanals 30 ein Umlenkelement 32, hier in Form einer Klappe vorgesehen, die nach Umstellung von der strichlierten Stellung in die eingezeichnete Lage das Preßgut durch einen kammartig gestalteten Abstreifer 29 in den oberen Bereich des Gehäuses 23 zurückzwingt. Hierbei ist wesentlich, daß beim Durchgang des Gutes durch den kammartig gestalteten Abstreifer 29 das Halm- oder Blattgut weiter zerkleinert wird, so daß es in nahezu pulverisierter Form auf die umlaufenden Werkzeuge 22 zurückfällt und von diesen großflächig in Breitenrichtung B verteilt wird.

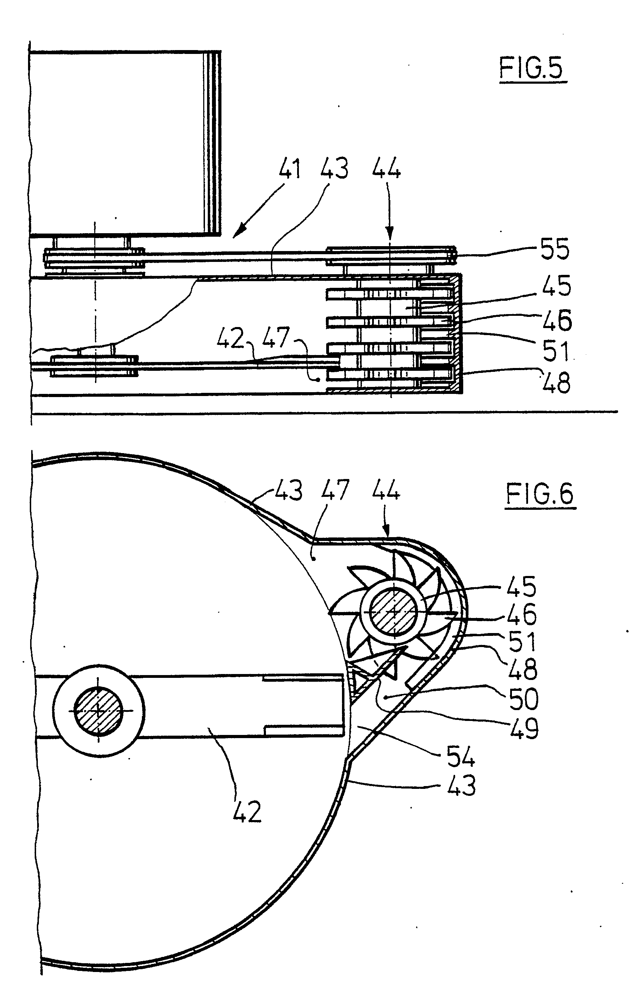

In Fig. 4 ist eine leicht modifizierte Ausfuhrung gemäß Fig. 3 dargestellt, wobei hier jedoch ein gesonderter Umlenkkanal 34 vorgesehen ist, der durch eine umstellbare Umlenkklappe 33 freigegeben wird, während dann zugleich der Preßkanal 30 abgesperrt wird. Bei dieser Ausfuhrung wird das zerkleinerte und gepreßte Halm- oder Blattgut nicht durch den Abstreifer 29 gezwungen, so daß hier eine etwas gröbere Zerkleinerung erreicht wird, was jedoch insbesondere bei trockenem Laub- oder Rasenschnitt zum Einmulchen vollständig ausreicht. Dabei wird andererseits ein geringerer Leistungsbedarf erreicht. Bei der eingezeichneten Stellung der Umlenkklappe 33 wird das Preßgut über den Umlenkkanal 34 in den unteren Teil des Gehäuses 23 der Mähvorrichtung 21 eingeleitet, dort von dem Luftstrom erfaßt und durch die umlaufenden Werkzeuge 22 im Gehäuse 23 entsprechend der Arbeitsbreite der Mähvorrichtung 21 gleichmäßig verteilt.

In den Figuren 5 und 6 ist eine Mähvorrichtung 41 dargestellt, die im Aufbau im wesentlichen der Mähvorrichtung 1 von Fig. 1 gleicht. Im Gegensatz zu dieser Ausführung ist jedoch hier die Zerkleinerungs- und Preßvorrichtung 44 senkrecht angeordnet, wobei sich ein vereinfachter Antrieb durch die parallele Lage der Antriebswellen ergibt. Das von dem umlaufenden Werkzeug 42 abgeschleuderte Gut gelangt über einen Einlaufbereich 47 in den Bereich der Zinken 46 des Zinkenrotors 45. Bei der Weiterförderung wird es am Pressenmantels 48 und zusätzlich an den Rillen 51 zerrissen und zerquetscht und im anschließenden Preßkanal 50 zusammengepreßt. An den Preßkanal 50 schließt sich ein Umlenkkanal 54 an, der das so kompaktierte Gut in das Gehäuse 43 der Mähvorrichtung 41 zurückführt, wobei es vom umlaufenden Werkzeug 42 erfaßt und gleichmäßig über die Arbeitsbreite verteilt wird, wobei die nahezu pulverisierten Gutteile in die Grasstoppeln der Rasenfläche und auf den Boden absinken.

In den Figuren 7, 8 und 9 ist eine Mähvorrichtung 61 dargestellt, in deren Gehause 63 wenigstens ein Mähwerkzeug 62 umläuft. Am rückwärtigen Bereich der Mähvorrichtung 61 ist eine Zerkleinerungs- und Preßeinrichtung 64 vorgesehen, die im wesentlichen aus einem Zinkenrotor 65 mit starren Zinken 66 besteht. Das gemähte Halm- oder Blattgut gelangt über einen Einlaufbereich 67 durch die Förderung der starren Zinken 66 in Rillen 71 am Pressenmantel 68, wobei das Halm- oder Blattgut stark zerkleinert und verdichtet wird. Das Preßgut wird an einem kammartigen Abstreifer 69 abgestreift und über einen Preßkanal 70 weiter in einen Behälter 72 gefördert. An der Unterseite des Preßkanals 70 ist ein klappenartiges Umlenkelement 73 vorgesehen, das in Fig. 7 entlang dem Preßkanal 70 ausgerichtet ist, so daß das gesamte zerkleinerte und gepreßte Halm- oder Blattgut in den Behälter 72 gelangt.

In Fig. 8 ist bei ansonsten gleichem Aufbau das Umlenkelement 73 etwa zur Hälfte in den Preßkanal 70 eingeschwenkt, so daß das in der Zerkleinerungs- und Preßvorrichtung 64 kompaktierte Gut teilweise, nämlich hier beispielsweise nur noch zu 50 %, in den Behälter 72 gelangt, während der andere Teilstrom durch einen Umlenkkanal 74 in das Gehäuse 63 zu den laufenden Werkzeugen 62 zurückgefördert wird, wie dies durch die sich aufspreizenden Pfeile angedeutet ist. Der durch den Umlenkkanal 74 geförderte Teilstrom an zerkleinertem oder gepreßtem Halm- oder Blattgut wird durch die umlaufenden Werkzeuge 62 nun auf der in der Arbeitsbreite gemähten Rasenfläche gleichmäßig verteilt, wobei die seitliche Streuung durch das Gehäuse 63 begrenzt wird.

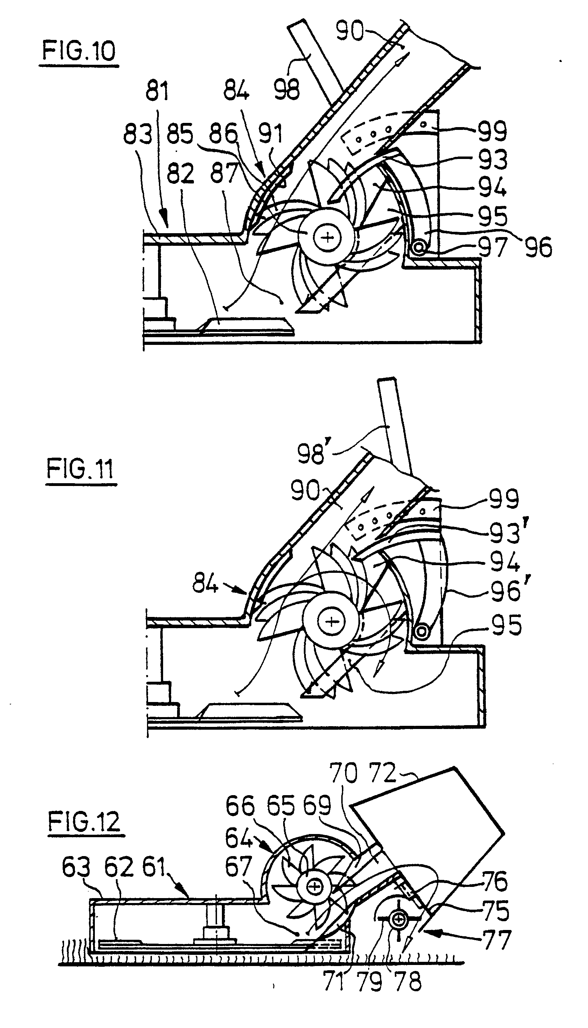

In Fig. 9 ist die Umlenkklappe 73 noch stärker in den Preßkanal 70 eingeschwenkt, so daß dieser praktisch verschlossen wird und somit kein Material mehr in den Behälter 72 gefördert wird, sondern das gesamte zerkleinerte und gepreßte Halm- oder Blattgut über den Umlenkkanal 74 zu der durch die umlaufenden Werkzeuge 62 gebildeten Verteilvorrichtung gelangt.

Wie auf der linken Seite der Figuren 7, 8 und 9 angedeutet ist, wird die nahezu vollständige Befüllung des Behälters 72 bei hohem Graswuchs angewendet, während bei niedriger Grashöhe (vgl. Fig. 9) der gesamte Rasenschnitt auf die Rasenfläche abgelegt und eingemulcht werden kann. Fig. 8 zeigt dagegen eine Zwischenstellung, wonach ein Teil des abgemähten Grases im Behälter 72 gesammelt wird, während der für die Rasenfläche noch verträgliche und schnell verrottbare Anteil des Rasenschnittes über den Umlenkkanal 74 und die durch die umlaufenden Werkzeuge 62 gebildete Verteileinrichtung auf dem Boden breitflächig zerstreut und abgelegt wird.

In Fig. 10 und 11 ist wiederum ein Ausschnitt aus einer Mähvorrichtung 81 mit umlaufenden Werkzeugen 82 an einem Gehäuse 83 dargestellt. Im Unterschied zu den bisherigen Zinkenrotoren läuft hier eine Zerkleinerungs- und Preßvorrichtung 84 im Uhrzeigersinn um, wobei hier Rillen 91 an der Oberseite der zu einem Preßkanal 90 führenden Wandung angeordnet sind. Zur Erleichterung des Aufnehmens des abgemähten Halm- oder Blattgutes aus einem Einlaufbereich 87 reichen klingenartige Abstreifer 95 bis nahe an die Umlaufebene der umlaufenden Werkzeuge 82. Die starren Zinken 86 des Zinkenrotors 85 laufen durch ein kammartig gestaltetes Umlenkelement 93 hindurch, das in der gezeichneten Stellung in Fig. 10 den Zugang zu einem Umlenkkanal 94 absperrt. Die Umlenkelemente 93 sind an einem Hebel 96 gelagert, der um einen Schwenkpunkt 97 mittels eines Stellhebels 98 verstellbar und an einem Rastbogen 99 feststellbar ist.

In Fig. 11 ist die verschwenkte Stellung des Stellhebels 98, hier mit 98′ bezeichnet, dargestellt. Hierbei gibt das verschwenkte Umlenkelement 93′ den Zugang zum Umlenkkanal 94 zumindest teilweise frei, so daß ein Großteil des durch den Zinkenrotor 85 zerkleinerten Halm- oder Blattgutes durch den Umlenkkanal 94 befördert wird, während ein kleinerer Teil über den Preßkanal 90 zum Beispiel zu einem Behälter gefördert wird. Dies ist durch die eingezeichneten Pfeile dargestellt, so daß wiederum je nach Rasenhöhe eine freie Einstellbarkeit der gesammelten bzw. eingemulchten Teilströme durch entsprechende Festlegung in Bohrungen des Rastbogens 99 möglich ist. Das durch den Umlenkkanal 94 geförderte Gut fällt wiederum von oben auf die umlaufenden Werkzeuge 82, wobei diese als Verteilvorrichtung dienen, um das stark zerkleinerte Gut exakt über die gesamte Arbeitsbreite zu verteilen. Bei dieser Ausführungsform ist wesentlich, daß bei Durchgang der Zinken 86 durch die Abstreifer 95 das Gut weiter zerkleinert und zerrissen wird, so daß dieses in nahezu pulverisierter Form auf die Verteilvorrichtung herabfällt.

In Fig. 12 ist eine im wesentlichen der Ausführungsform gemäß Fig. 7, 8 und 9 entsprechende Mähvorrichtung 61 und Zerkleinerungs- und Preßvorrichtung 64 dargestellt. Anstatt eines Umlenkelementes 73 und eines Umlenkkanals 74 ist hier jedoch eine gesondert angetriebene, der Arbeitsbreite der Mähvorrichtung 61 entsprechende Verteilerwalze 77 vorgesehen, wobei das zerkleinerte und gepreßte Halm- oder Blattgut zunächst gesamt im Behälter 72 gesammelt wird und je nach Anfallmenge und Bodenverträglichkeit ganz oder teilweise durch die Verteilerwalze 77 wiederum exakt der Arbeitsbreite B entsprechend auf dem Boden verteilt abgelegt wird. Hierzu ist im Behälter 72 eine Auslaßöffnung 75 vorgesehen, deren Auslaßquerschnitt über einen Schieber 76 verstellbar ist. Die Verteilerwalze 77 besteht im wesentlichen aus einem Rotor 78 und daran angeordneten Zinken 79. Durch diese Ausführungsform kann somit ebenso wie in der Ausführungsform gemäß Fig. 7, 8 und 9 das Verhältnis des Anteils des zu sammelnden Gutes zum Anteil des einzumulchenden Gutes stufenlos verändert werden. In der gezeigten Stellung in Fig. 12 mit nur teilweise geöffnetem Schieber 76 an der Auslaßöffnung 75 wird nur ein Teil des gesammelten Halm- und/oder Blattgutes auf dem Boden verteilt und eingemulcht.

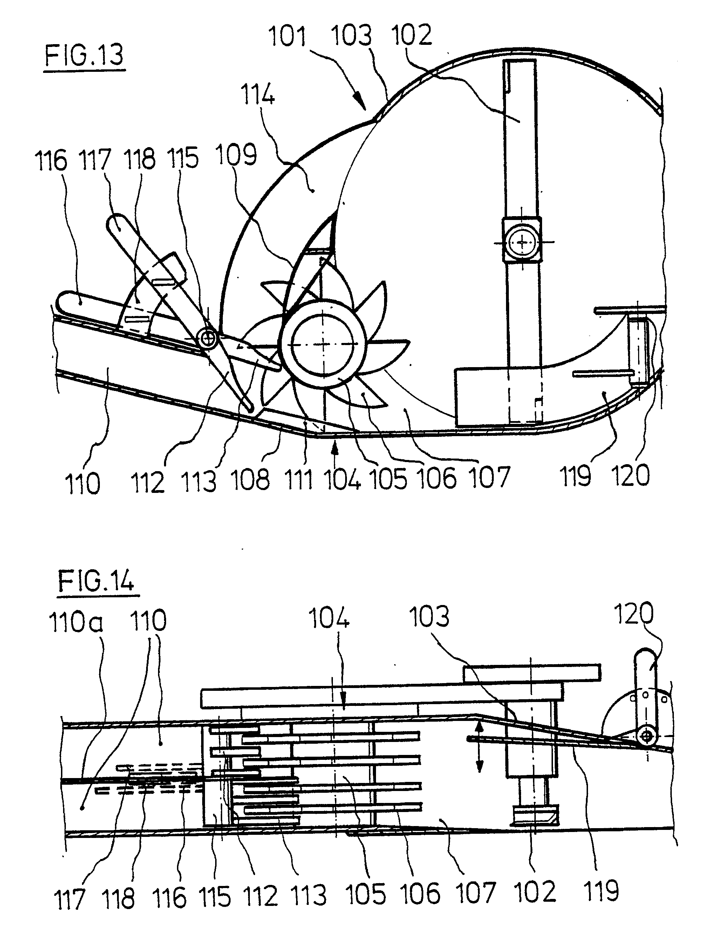

In Fig. 13 ist wiederum eine Mähvorrichtung 101 dargestellt, in deren Gehäuse 103 Mähwerkzeuge 102 umlaufen. Der Aufbau der Zerkleinerungs- und Preßvorrichtung 104 mit einem Zinkenrotor 105, Zinken 106, Einlaufbereich 107, Pressenmantel 108, Abstreifer 109, Preßkanal 110 und Rillen 111 entspricht im wesentlichen der Ausführungsform der Figuren 5 und 6. Anstatt der bisher vorgeschlagenen Umlenkelemente zur teilweisen Aufteilung des Gutstromes unmittelbar nach der Zerkleinerungs- und Preßeinrichtung wird bei dieser Ausführungsform die Zerkleinerungs- und Preßvorrichtung aus mehreren gleichartigen Aggregaten aufgebaut und jedes Aggregat so ausgelegt, daß es wahlweise zum Sammeln in einen Behälter oder zum Verteilen auf den Boden umstellbar ist.

Dadurch kann jedes Aggregat sowohl zum Pressen als auch für den Verteilbetrieb eingesetzt werden, wodurch die zur Weiterleitung in einen Sammelbehälter oder in die Verteilvorrichtung notwendigen Umlenkkanäle optimal ausgelegt werden können. Dementsprechend sind hier zwei Umlenkelemente 112 und 113 vorgesehen, die unabhängig voneinander auf den Sammelbetrieb oder den Umlenkbetrieb verstellbar sind. Hierzu sind die Umlenkelemente 112 und 113 um einen gemeinsamen Schwenkpunkt 115 mit zugeordneten Verstellhebeln 116 und 117 an einem Rastbogen 118 unabhängig voneinander festlegbar. Das hier obere Umlenkelement 112 verschließt den Preßkanal 110, der hier mit einer Zwischenwand 110a doppelt vorgesehen ist, während das untenliegende Umlenkelement 113 den Umlenkkanal 114 verschließt, also somit den untenliegenden Preßkanal 110 freigibt. In der gezeigten Stellung wird somit etwa die halbe Menge des gemähten, zerkleinerten und gepreßten Halm- oder Blattgutes über den Umlenkkanal 114 in die Mähvorrichtung 101 zurückgeführt, während die andere Hälfte über den untenliegenden Preßkanal 110 in einen Behälter gefördert wird. Falls kein Einmulchen erfolgen soll, kann bei Verstellung des Umlenkelementes 112 in die gezeigte Stellung des Umlenkelementes 113 auch der obere Preßkanal 110 freigegeben werden, während hierbei der Umlenkkanal 114 verschlossen wird, so daß somit das gesamte Gut gesammelt wird. Durch die teilweise Verstellung der Umlenkelemente 112 und 113 kann jedoch auch eine beliebige Zwischenmenge und damit eine variable Aufteilung des Verhältnisses zwischen gesammeltem und rückgeführtem (eingemulchtem) Gut erreicht werden.

Zur weiteren feinstufigen Einstellung der Aufteilmenge zwischen gesammeltem und rückgeführtem (bzw. einzumulchendem) Preßgut kann auch der Zustrom des Halm- oder Blattgutes zu der Zerkleinerungs- und Preßvorrichtung 104 durch eine Leiteinrichtung 119 verstellt werden, die hier durch einen Schwenkhebel 120 in der Höhe verschwenkbar ist. Hierdurch wird das von den umlaufenden Werkzeugen 102 abgeschleuderte Gut in der höchsten Stellung dem gesamten Zinkenrotor 105 zugeführt, während in der niedrigsten Stellung das Halm- oder Blattgut über den Einlaufbereich 107 nur dem unteren Teilbereich des Zinkenrotors 105 zugeführt wird. In der gezeigten Stellung würde somit das Halm- oder Blattgut vorwiegend dem untenliegenden Preßkanal 110 zugeführt, so daß der Großteil des Gutes gesammelt würde. Die Leiteinrichtung 119 ist über einen nicht näher bezeichneten Rastbogen und den Stellhebel 120 ebenfalls in mehreren Stufen einstellbar, so daß eine größtmögliche Anpassung an das Verhältnis zwischen Sammelbetrieb oder Mulchbetrieb gewährleistet ist.

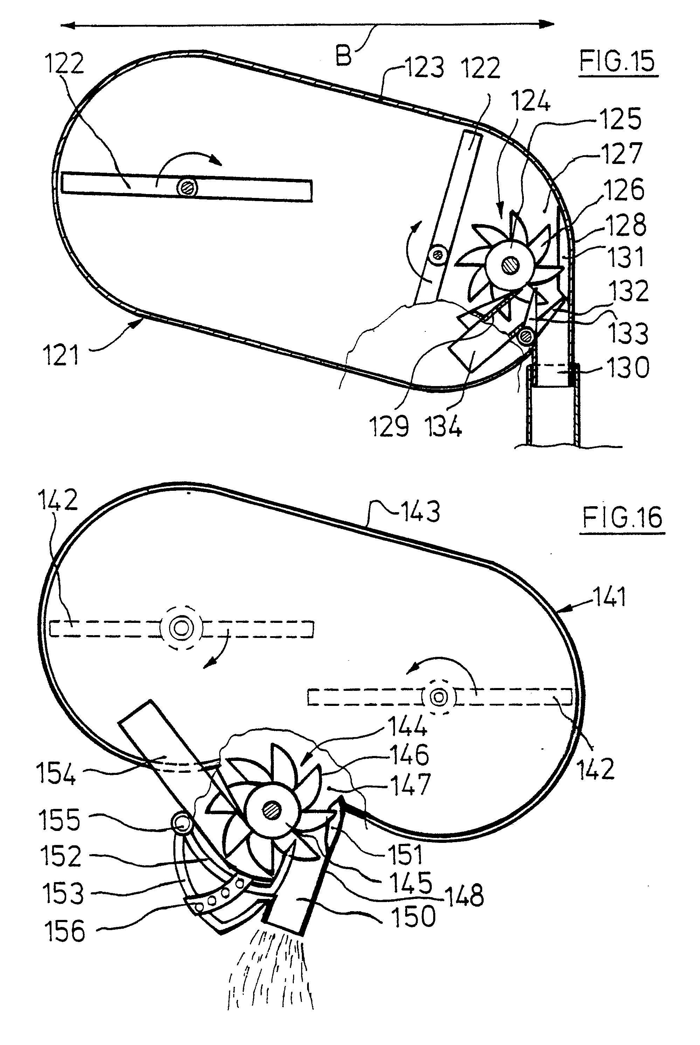

In Fig. 15 ist eine Mähvorrichtung 121 als Doppelsichelmäher mit zwei umlaufenden Werkzeugen 122 und einer seitlich angebrachten Zerkleinerungs- und Preßvorrichtung 144 gezeigt. Über den Einlaufbereich 127 wird das Gut dem Zinkenrotor 125 zugeführt, der es teilweise in den zu einem Behälter führenden Preßkanal 130 und zu einem in das Gehäuse 123 zurückführenden Umlenkkanal 134 fördert. Zur wahlweisen Absperrung des Preßkanals 130 und/oder des Umlenkkanals 134 sind hier zwei klappenartige Umlenkelemente 132 und 133 vorgesehen. Das über den Umlenkkanal 134 in das Gehäuse 123 zugeführte Halm- oder Blattgut wird durch die beiden umlaufenden Werkzeuge 122 auf der Arbeitsbreite B verteilt.

In Fig. 16 ist eine Zerkleinerungs- und Preßeinrichtung 144 zwischen den umlaufenden Mähwerkzeugen 142 einer Mähvorrichtung 141 dargestellt. Ein Preßkanal 150 führt zu einem nicht dargestellten Behälter oder kann wahlweise für eine nachfolgende Aufnahme des überschüssigen, nicht einzumulchenden Materials, z. B. durch eine Rechvorrichtung, auch wie eingezeichnet zur Schwadablage dienen. Ein Umlenkkanal 154, der durch einen bogenartigen Kamm 153 freigegeben ist, führt in das Gehäuse 143 zur Verteilung des Gutes durch die Werkzeuge 142 zurück. Die Umlenkelemente 152 und 153 sind winkelförmig im Radius um ein Schwenklager 155 angeordnet und an einem Rastbogen 156 wahlweise festlegbar.

## Ansprüche

1. Verfahren zum Einmulchen von Halm- oder Blattgut, insbesondere von Gras oder Laub, bei dem zunächst das Halm-oder Blattgut gemäht und/oder aufgenommen wird, dann in einer sich daran unmittelbar anschließenden Zerkleinerungs- und Preßvorrichtung zerkleinert und gepreßt, sowie schließlich auf dem Boden abgelegt wird, dadurch gekennzeichnet, daß das gemähte/aufgenommene Halm- oder Blattgut beim Weiterfördern mit der Zerkleinerungs- und Preßvorrichtung (4,24,44,64,84,104,124,144) in einen Preßkanal (10,30,50,70,90,110,130,150) bzw. einen Umlenkkanal (34,54,74,94,114,134,154) zerrissen und zerquetscht wird und anschließend in Breitenrichtung (B) verteilt auf dem Boden abgelegt wird.

2. Verfahren nach Anspruch 1, dadurch gekennzeichnet, daß das zerkleinerte Halm- oder Blattgut in eine Mäh-/Aufnahmevorrichtung zurückgeführt wird und durch diese verteilt auf den Boden abgelegt wird.

3. Verfahren nach Anspruch 1 oder 2, dadurch gekennzeichnet, daß das zerkleinerte Halm- oder Blattgut in einem ersten Teilstrom einem Behälter zugeführt wird und in einem zweiten Teilstrom in eine Verteilvorrichtung zurückgeführt wird.

4. Verfahren nach Anspruch 3, dadurch gekennzeichnet, daß die Anteile des ersten Teilstromes von gesammeltem Gut und des zweiten Teilstromes von auf dem Boden verteiltem Gut veränderbar sind.

5. Verfahren nach Anspruch 1, dadurch gekennzeichnet, daß das gesamte zerkleinerte Halm- oder Blattgut zunächst in einem Behälter gesammelt und von dort ganz oder teilweise auf dem Boden verteilt abgelegt wird.

6. Vorrichtung zum Einmulchen von Halm- oder Blattgut, insbesondere von Gras oder Laub mit einer Mäh-/Aufnahmevorrichtung und einer an diese unmittelbar anschließenden Zerkleinerungs- und Preßvorrichtung, dadurch gekennzeichnet, daß die Zerkleinerungs- und Preßvorrichtung (4, 24, 44, 64, 84, 104, 124, 144) aus einem Zinkenrotor (5, 25, 45, 65, 85, 105, 125, 145) besteht, dessen Zinken (6, 26, 46, 66, 86, 106, 126, 146) das Halm- oder Blattgut gegen einen den Zinkenrotor (5,25,45,65,85,105,125,145) teilweise umgebenden Pressenmantel (8,28,48,68,88,108,128,148) drücken und in einen Preßkanal (10,30,50,90,110,130,150) weiterfördern, sowie zu einer sich daran anschließenden Verteilvorrichtung (12,22,42,62,77,82,102,122,142) zuführen.

7. Vorrichtung nach Anspruch 6, dadurch gekennzeichnet, daß die Verteilvorrichtung durch einen sich in Breitenrichtung (B) erweiternden, ansteigenden Krümmer (12) mit einer Ausöffnung (13) gebildet ist.

8. Vorrichtung nach Anspruch 6, dadurch gekennzeichnet, daß die Verteilvorrichtung durch eine angetriebene Verteilerwalze (77) gebildet ist, deren Verteilbreite annähernd der Arbeitsbreite (B) der Mäh-/Aufnahmevorrichtung (61) entspricht.

9. Vorrichtung nach Anspruch 6, dadurch gekennzeichnet, daß die Verteilvorrichtung durch umlaufende Werkzeuge (2, 22, 42, 62, 82, 102, 122, 142) der Mäh-/Aufnahmevorrichtung (1, 21, 41, 61, 81, 101, 121, 141) gebildet ist, wobei nach der Zerkleinerungs- und Preßvorrichtung (4, 24, 44, 64, 84, 104, 124, 144) ein zu dem Gehäuse (3, 23, 43, 63, 83, 103, 123, 143) der Mäh-/Aufnahmevorrichtung (1, 21, 41, 61, 81, 101, 121, 141) zurückführender Umlenkkanal (34, 54, 74, 94, 114, 134, 154) abzweigt.

10. Vorrichtung nach Anspruch 9, dadurch gekennzeichnet, daß wenigstens ein Umlenkelement (32, 33, 73, 93, 112, 113, 132, 133, 152, 153) zur Wahlweisen Umlenkung des zerkleinerten und gepreßten Halm- oder Blattgutes zwischen dem Umlenkkanal (34, 54, 74, 94, 114, 134, 154) und einem Preßkanal (10, 30, 50, 70, 90, 110, 130, 150) vorgesehen ist.

11. Vorrichtung nach Anspruch 10, dadurch gekennzeichnet, daß wenigstens zwei Umlenkelemente (112,113 bzw. 132, 133 bzw. 152,153) Vorgesehen sind, die jeweils einem Teilbereich der Zerkleinerungs- und Preßvorrichtung (104,124,144) und wahlweise wenigstens einem Preßkanal (110,130,150) oder einem Umlenkkanal (114,134,154) zugeordnet sind.

12. Vorrichtung nach einem der Ansprüche 6 bis 11, dadurch gekennzeichnet, daß die Zerkleinerungs- und Preßvorrichtung (4, 24, 44, 64, 84, 104, 124, 144) am Pressenmantel (8, 28, 48, 68, 88, 108, 128, 148) Rillen (11, 31, 51, 71, 91, 111, 131, 151) aufweist, durch die die Zinken (6, 26, 46, 66, 86, 106, 126, 146) bei deren Rotation hindurchlaufen.

13. Vorrichtung nach einem der Ansprüche 6 bis 12, dadurch gekennzeichnet, daß der Umlenkkanal (34, 94, 134, 154) von oben her in das Gehäuse (23, 83, 123, 143) einmündet.

14. Vorrichtung nach einem der vorhergehenden Ansprüche, dadurch gekennzeichnet, daß an den Preßkanal (70) ein Sammelbehälter (72) angeschlossen ist.

15. Vorrichtung nach einem der vorhergehenden Ansprüche, dadurch gekennzeichnet, daß der Zustrom des gemähten oder aufgenommenen Halm- oder Blattgutes zu der Zerkleinerungs- und Preßvorrichtung (104) durch eine Leiteinrichtung (119) verstellbar ist.

FIG.1

FIG.2

FIG.3

FIG.4

FIG.5

FIG.6

FIG.7

FIG.8

FIG.9

EP 0 422 624 A1

FIG.10

FIG.11

FIG.12

FIG.13

FIG.14

FIG.15

FIG.16

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| Y | US - A - 3 712 353 <br> (FERRY) <br> * Zusammenfassung; Fig. 1 * | 1 | A 01 D 34/68 <br> A 01 D 43/00 |
| A | * Zusammenfassung; Fig. 1 * | 3,5 | |
| Y | US - A - 3 872 654 <br> (BRUNDAGE et al.) <br> * Spalte 2, Zeilen 18ff; <br> Fig. 3-5 * | 1 | |
| A | US - A - 3 641 754 <br> (ANSTEE) <br> * Spalte 2, Zeilen 4ff; <br> Fig. 3 * <br> * Spalte 3, Zeilen 10ff; <br> Fig. 3 * | 6,14 <br><br><br> 12 | |
| A | DE - A - 2 002 584 <br> (WESTON S.P.A.) <br> * Seite 2, vorletzte Zeile <br> - Seite 3; Fig. 1 * | 7,8 | **RECHERCHIERTE SACHGEBIETE (Int Cl.⁵)** <br><br> A 01 D 34/00 <br> A 01 D 43/00 <br> A 01 G  1/00 |
| A | AT - B - 304 122 <br> (LANDBOUWERKTUIGEN-EN MACHINE- <br> FABRIEK H. VISSERS N.V.) <br> * Seite 3, Zeilen 10ff; <br> Fig. 1,7 * | 9 | |

Der vorliegende Recherchenbericht wurde für alle Patentansprüche erstellt.

| Recherchenort | Abschlußdatum der Recherche | Prüfer |
|---|---|---|
| WIEN | 23-11-1990 | SCHNEEMANN |